# EUROPÄISCHE PATENTSCHRIFT

(11) **EP 4 054 904 B1**
(45) Veröffentlichungstag und Bekanntmachung des Hinweises auf die Patenterteilung: **14.02.2024**
(21) Anmeldenummer: 20800917.5
(22) Anmeldetag: 04.11.2020
(51) Int. Cl.: B60S 3/06

(54) **ERMITTELN EINER GEOMETRISCHEN MITTENPOSITION EINES FAHRZEUGES**
DETERMINING A GEOMETRIC CENTRE POSITION OF A VEHICLE
DÉTERMINATION D'UNE POSITION CENTRALE GÉOMÉTRIQUE D'UN VÉHICULE

(30) Priorität: 07.11.2019 DE 102019130066
(43) Veröffentlichungstag der Anmeldung: 14.09.2022
(73) Patentinhaber: WashTec Holding GmbH, 86153 Augsburg (DE)
(72) Erfinder: FOERG, Oliver, 86199 Augsburg (DE); HEINZ, Bernhard, 86368 Gersthofen (DE); STECHER, David, 86653 Monheim (DE)
(74) Vertreter: Schwarz, Claudia
(86) Internationale Anmeldenummer: PCT/EP2020/080897
(87) Internationale Veröffentlichungsnummer: WO 2021/089590

(56) Entgegenhaltungen:
- JP-A- H01 306 350
- JP-A- S63 195 050
- JP-B2- 5 525 996

## Beschreibung

Die vorliegende Erfindung betrifft eine Waschanlage mit Mitteln zum Berechnen einer geometrischen Mittenposition eines innerhalb einer Waschanlage positionierten Fahrzeuges. Zudem betrifft die vorliegende Erfindung ein Verfahren zum Reinigen eines Fahrzeuges und ein Computerprogramm.

Fahrzeuge und insbesondere deren Karosserie weisen oft Strukturen auf, welche Anbauteile, Überstände oder Einbuchtungen beinhalten, die entweder ein gewünschtes Design erzeugen oder einen technischen Effekt erzielen. Diese Strukturen erschweren allerdings das Reinigenq des Fahrzeuges, insbesondere das automatische Reinigen in einer Portalwaschanlage oder Waschstraße. Hierbei ist unter einer Portalwaschanlage eine Waschanlage zu verstehen, in der das Fahrzeug während des Reinigungsvorgangs an einer Position verbleibt, wobei hingegen unter einer Waschstraße eine Waschanlage zu verstehen ist, bei der das Fahrzeug durch eine Schleppkette während des Reinigungsvorgangs durch die Waschstraße gezogen wird. Zur Verallgemeinerung wird in der vorliegenden Erfindung der Begriff Waschanlage als übergeordneter Terminus für eine Portalwaschanlage und eine Waschstraße verwendet. Mit Bezug auf die jeweiligen technischen Unterschiede wird allerdings der spezielle Terminus Portalwaschanlage oder Waschstraße verwendet. Im Stand der Technik bekannte Waschanlagen weisen zur Reinigung eines Fahrzeugs eine rotierende Dachbürste und zwei rotierende Seitenbürsten auf, da die rotierende Dachbürste für sich allein nicht in alle Strukturen, insbesondere nicht in die Strukturen an der Front und am Heck des Fahrzeuges eingreifen kann. Beispielsweise erreichen bei Überständen an der Karosserie die Bürstenhaare der Dachbürste durch einen Rücksprung nicht alle Flächen, insbesondere nicht die Ecken des Überstandes, womit die Reinigung nicht vollständig erfolgt bzw. das Reinigungsergebnis qualitativ unzureichend ist. Zur Verbesserung der Front und Heckwäsche erfolgt bei im Stand der Technik bekannten Waschanlagen durch die zwei rotierenden Seitenbürsten während der Front- und Heckwäsche eine Fahrt über die Mittenposition der Waschanlage in die eine und die andere Richtung hinaus, so dass eine vollständige Reinigung des Fahrzeuges erzielt werden kann. Ein Überfahren der Mittenposition, durch eine Mittenüberdeckung, ist notwendig, da die rotierenden Seitenbürsten nicht auf Null zusammenfahren können und somit kein Überlappen der Bürstenhaare möglich ist. Dazu ist es notwendig, die Mittenposition zu bestimmen.

Im Stand der Technik bekannte Waschanlagen führen die notwendige Bestimmung der Mittenposition in Bezug auf die "eigene" Mitte (Mittellängsachse der Waschanlage) durch, was nachteiligerweise dazu führt, dass bei kleineren und sehr außermittig platzierten Fahrzeugen eine der beiden rotierenden Seitenbürsten über die Breite des Fahrzeuges hinausfährt und das Fahrzeug kaum noch berührt. Im Ergebnis kann dies unter den genannten Umständen zu einem qualitativ unzureichendem Reinigungsergebnis führen.

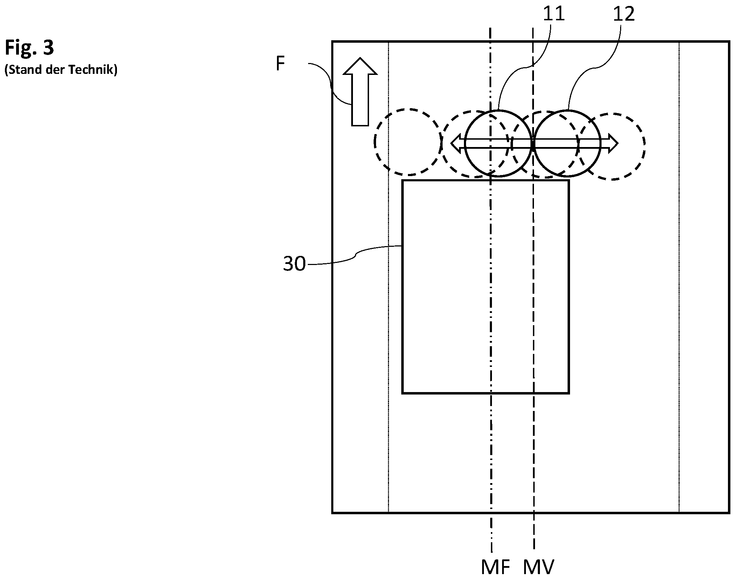

In Fig. 3 ist eine Waschanlage mit einem stark außermittig positionierten Fahrzeug 30 in der Waschanlage dargestellt. Der Pfeil F stellt die Fahrtrichtung des Fahrzeuges 30 dar. Die Mittenüberdeckung erfolgt basierend auf der Mittenachse MV der Waschanlage. Diesbezüglich erfolgt das Verfahren der rotierenden Reinigungsbürsten 11, 12 für das Reinigen der Fahrzeugfront beginnend von der Mittenachse MV der Waschanlage jeweils in die linke und rechte Richtung. Bei einem Verfahren der rotierenden Reinigungsbürsten 11, 12 in die rechte Richtung, fährt die rotierende Reinigungsbürste 12 über das Fahrzeug 30 hinaus, womit ein Kontakt zwischen der rotierenden Reinigungsbürste 12 und dem Fahrzeug 30 verloren gehen kann. In dem Bereich des Fahrzeugs kommt es durch den Kontaktverlust zu einem wegknicken der rotierenden Reinigungsbürste 12 oder zu einem zu geringen Auflagedruck der rotierenden Reinigungsbürste 12 an dem Fahrzeug, womit dieser Bereich, insbesondere die Kante und Kurve des Fahrzeughecks gar nicht oder nur unzureichend gereinigt werden. Zudem kostet ein Verfahren der Reinigungsbürsten in die Richtung ohne Reinigungswirkung Prozesszeit.

JP H01 306350 A betrifft eine Vorrichtung und ein Verfahren zur Erfassung der Seitenfläche eines zu waschenden Fahrzeugs, indem die Position einer Seitenfläche der Karosserie auf der Grundlage der Positionen der vertikalen Bürsten in einem nach außen gerichteten Waschhub der vertikalen Bürsten erfasst wird und dadurch die Positionen der Trocknungsdüsen für die Seitenfläche in einem Rücktrocknungshub auf der Grundlage der erfassten Positionen der jeweiligen Seitenflächen gesteuert werden. Es ist vorgesehen, ein Paar von vertikalen Bürsten und ein Paar von Seitenflächen-Trocknungsdüsen an beiden Seiten eines Portalfahrgestells in einer solchen Weise vorzusehen, sodass sie sich einem Fahrzeug frei nähern und von ihm getrennt werden können.

JP S63 195050 A betrifft das Bereitstellen eines reibungslosen Waschvorgang unabhängig von der Breite des Fahrzeugs. Es wird der Kontaktzustand einer Bürste mit dem Fahrzeug ermittelt. Der Kontaktzustand wird anhand des Stroms, der in einen Bürstendrehmotor fließt, ermittelt. Die vertikalen Seitenbürsten werden in Abhängigkeit vom Kontaktzustand angesteuert und zum Fahrzeug hin und vom Fahrzeug weg bewegt.

JP 5 525 996 B2 betrifft das Bereitstellen einer Fahrzeugwaschmaschine. Eine von zwei Seitenbürsten ist zum Andrücken der Seitenbürste gegen eine Fahrzeugkarosserie und zum seitlichen Neigen der Seitenbürste in einem vorbestimmten Winkel bestimmt, um auch seitlich geneigte Seitenflächen gut reinigen zu können.

Es ist daher Aufgabe der vorliegenden Erfindung, Mittel und Maßnahmen für eine Waschanlage bereitzustellen, um ein verbessertes Reinigungsergebnis auch bei außermittig und/oder schräg positionierten Fahrzeugen zu ermöglichen und die Nachteile der im Stand der Technik bekannten Waschanlagen zumindest teilweise zu beheben.

Diese Aufgabe wird erfindungsgemäß durch die Merkmalskombinationen der einander nebengeordneten Patentansprüche gelöst, insbesondere durch eine Waschanlage, eine Vorrichtung, einem Verfahren zum Ermitteln einer geometrischen Mittenposition eines innerhalb einer Waschanlage positionierten Fahrzeuges, einem Verfahren zum Reinigen und einer Vorrichtung sowie durch ein Computerprogramm.

Gemäß einem ersten Aspekt betrifft die Erfindung eine Waschanlage mit einer Vorrichtung zum Ermitteln einer geometrischen Mittenposition eines innerhalb der Waschanlage positionierten Fahrzeuges mit den Merkmalen des Patentanspruchs 1.

Die Erfindung hat den Vorteil, dass der Waschvorgang durch die vorab durchgeführte Ermittlung der Mittenposition beschleunigt und qualitativ verbessert werden kann. Die Mittenposition wird erfindungsgemäß nicht mehr in Abhängigkeit von der Waschanlage (als Mitte der Waschanlage) bestimmt, sondern berücksichtigt die tatsächliche Position des Fahrzeugs in der Waschanlage. Eine außermittige Positionierung und sogar eine Schiefstellung des Fahrzeuges (in einem Winkelbereich von +/- 10° werden automatisch detektiert und der Waschvorgang kann unter Berücksichtigung dieser tatsächlichen Position des Fahrzeugs relativ zur Waschanlage angepasst bzw. modifiziert durchgeführt werden. Deshalb wurde oben die Formulierung "die Traverse erstreckt sich im Wesentlichen quer zur Längsachse des Fahrzeugs" gewählt, um Schiefstellungen mitabzudecken (Fahrzeuglängsachse weicht von Längsachse der Waschanlage ab).

Die Waschanlage ist in Bezug zu deren Längsachse, insbesondere in Bezug zu deren Mittelängsachse symmetrisch ausgebildet. Deshalb kann im Folgenden davon ausgegangen werden, dass wenn bauliche Einheiten oder konstruktive oder funktionale Maßnahmen auf einer Seite beschrieben werden, diese analog bzw. entsprechend auch für die andere Seite gelten soll, es sei denn es ist etwas Abweichendes explizit erwähnt.

Schiefstellungen können auf unterschiedlichen Methoden ermittelt werden. In einer bevorzugten Ausführung können Schiefstellungen ermittelt werden, indem insbesondere der oben beschriebene Vorgang zur Ermittlung der Mittenposition (u.a. durch Nach-Innenfahren der beiden seitlichen Reinigungsbürsten und bei Fahrzeug-Kontaktaufnahme: Erfassung der Fahrschlittenposition) mehrfach ausgeführt wird über die Länge des Fahrzeuges (im Folgenden auch kurz KFZ genannt). So kann z.B. die Ermittlung an der Front, etwa in der Mitte des KFZ und am Heck ausgeführt werden. Die ermittelten Werte werden gespeichert und können optional in einem weiteren Rechenschritt auf Übereinstimmung verglichen werden. Weichen die Werte signifikant voneinander ab, kann rein rechnerisch auf eine Schiefstellung geschlossen werden. Entsprechende Warnhinweise und Steuersignale können bereitgestellt werden. Alternativ oder kumulativ können Signale von weiteren Sensoren (z.B. Lichtschranken zur Messung der KFZ-Breite und/oder Länge) berücksichtigt werden.

In einer weiteren bevorzugten Ausführung umfasst die Waschanlage einen ersten Leistungsaufnehmer als elektronisches Bauteil zur Erfassung der Leistungsaufnahme der ersten Reinigungsbürste und analog einen zweiten Leistungsaufnehmer zur Erfassung der Leistung der zweiten Reinigungsbürste, wobei die erste und zweite (seitliche) Reinigungsbürste jeweils über einen Bürstenrotationsantrieb angetrieben werden. Die Leistungsaufnehmer dienen zur Erfassung der Rotationsleistung der Seitenbürste. Die Seitenbürsten werden zunächst von außen kommend nach innen auf das KFZ zu bewegt, so dass sie zunächst frei rotieren und noch nicht in Kontakt mit dem KFZ sind und erst bei fortschreitenden Lateralbewegung nach Innen in Eingriff mit dem KFZ oder dessen Bauteilen gelangen, was regelmäßig mit einer Leistungsaufnahmeerhöhung verbunden ist, da die Bürsten dann nicht mehr frei rotieren. Diese Signalveränderung kann erfasst werden und kennzeichnet den Zeitpunkt, an dem die Bürste in Kontakt mit dem KFZ kommt. Dieser Zeitpunkt kann in einer ersten Ausführung dazu dienen, die Position des Fahrschlittens der jeweiligen Bürste zu erfassen und zur Berechnung der Mittenposition zu verwenden.

In einer weiteren bevorzugten Ausführung kann die Waschanlage eine dritte Messeinheit (z.B. einen Winkelsensor) umfassen, die zumindest teilweise an der ersten Reinigungsbürste angeordnet sein kann und zur Erfassung eines Neigungswinkels der ersten Reinigungsbürste um zumindest eine Schwenkachse dient, die quer zur Längsrichtung der Waschanlage verläuft. Analog kann eine vierte Messeinheit (Winkelsensor, z.B. an der zweiten Reinigungsbürste) zur Erfassung eines Neigungswinkels der zweiten Reinigungsbürste um eine Schwenkachse, die ebenfalls quer zur Längsrichtung der Waschanlage verläuft, ausgebildet sein. Dies hat den technischen Hintergrund, dass die meisten Fahrzeuge schräg geneigte Seitenflächen haben. Weiterhin können die Seitenbürsten in zwei Betriebsmodi betrieben werden:
1. Aktivieren der Verschwenkbarkeit - die Bürste kann ausgelenkt werden, insbesondere in der oben genannten Schwenkachse und
2. Deaktivieren der Verschwenkbarkeit - die Bürste ist in ihrer senkrechten unausgelenkten Grundstellung fixiert.

Die Bürste wird vor oder während des Nachinnen-Fahrens des jeweiligen Fahrschlittens in Betriebsmodus 1 mit aktivierter Verschwenkbarkeit betrieben. Da zunächst noch kein Eingriff mit dem KFZ erfolgt, verbleibt die Bürste in ihrer senkrechten Stellung. Sobald allerdings die Bürste an das KFZ geführt wird und der Fahrschlitten weiter nach Innen verschoben wird, führt dies automatisch zu einem Anlagen der Bürste an die seitliche geneigte Seitenfläche des KFZ und somit zu einer Auslenkung der Achse der Bürste und damit zu einer Winkeländerung, die erfasst wird. Diese Signalveränderung (hier: des Winkels) kann erfasst werden und kennzeichnet den Zeitpunkt, an dem die Bürste in Kontakt mit dem KFZ kommt. Dieser Zeitpunkt kann in einer zweiten Ausführung dazu dienen, die Position des Fahrschlittens der jeweiligen Bürste zu erfassen und zur Berechnung der Mittenposition zu verwenden. Mit anderen Worten dient die erfasste Signaländerung (z.B. anderes Winkelsignal und/oder andere Leistung der Bürstenrotation) als Triggersignal zum Auslesen bzw. Erfassen oder Speichern der aktuellen Fahrschlittenposition.

Es ist auch möglich, die erste Ausführung zur Detektion des Sich-In-Kontakt-Befindens der Reinigungsbürste mit dem KFZ (Erfassung veränderte Leistungsaufnahme) und die zweite Ausführung (Erfassung veränderter Winkel) zu kombinieren. Insbesondere kann die erste Berechnung (gemäß erster Ausführung) zur Validierung des Ergebnisses der zweiten Berechnung / Ausführung oder umgekehrt dienen. Damit wird es möglich, die Qualität der Mittenberechnung zu erhöhen. Weiterhin ist es möglich, die Mittenposition auch von solchen KFZ Typen korrekt zu ermitteln, die keine geneigten Seitenflächen haben (Transporter, Bus etc.). Die Vorrichtung kann demnach dazu bestimmt sein, jeweils diejenige Fahrposition des ersten Fahrschlittens und des zweiten Fahrschlittens zur Ermittlung der Mittenposition zu verwenden, die zu einem Zeitpunkt erfasst wird, bei dem eine dritte bzw. vierte Messeinheit ein verändertes Messergebnis (Winkeländerung) erfasst und/oder bei dem ein erster bzw. zweiter Leistungsaufnehmer zur Erfassung der Leistungsaufnahme der ersten und zweiten Reinigungsbürste ein verändertes Messergebnis (Leistungsaufnahmeänderung) erfasst. Vorteilhafterweise kann also das Erfassen, ob die Reinigungsbürste in Kontakt mit der jeweiligen Außenfläche des Fahrzeuges ist oder gelangt, erfolgen, indem eine dritte bzw. vierte Messeinheit (z.B. Winkelsensor) und/oder ein Leistungsaufnehmer für die erste Reinigungsbürste bzw. für die zweite Reinigungsbürste ein verändertes Messsignal als Ergebnis erfassen.

In einer weiteren bevorzugten Ausführung können die erste Messeinheit, die zweite Messeinheit, die dritte Messeinheit und/oder die vierte Messeinheit einen Magneten und einen Magnetfeldsensor umfassen. Dies birgt Vorteile dahingehend, dass die Funktion des Sensors nicht temperatur- und feuchtigkeitsabhängig, gegenüber Erschütterungen unempfindlich und auch nicht durch Wasserdruck beeinflussbar ist. Die erste und zweite Messeinheit zur Erfassung einer Bewegung bzw. Positionsveränderung der Fahrschlitten bzw. indirekt der Mittellängsachse der jeweiligen seitlichen Reinigungsbürsten kann z.B. als linear magnetischer Hall-Sensor zur Erfassung der Position von linearen Bewegungsverschiebungen der Fahrschlitten entlang der Traverse ausgebildet sein. Alternativ können optische und/oder induktive Wegemesssysteme zum Einsatz kommen. Die Messeinheiten können auch als elektronischer integrierter Schaltkreis (z.B. mit Hallsensoren und Signalverarbeitung) ausgebildet sein, was kleine Bauformen ermöglicht.

In einer vorteilhaften Ausführungsform der Erfindung kann es vorgesehen sein, dass die Fahrpositionen nur intermittierend ermittelt werden und insbesondere nur dann, wenn sich die zugehörige Reinigungsbürste in Kontakt mit dem Fahrzeug befindet. Alternativ kann es zur Reduktion von Speicherplatz vorzugsweise auch konfiguriert sein, dass die Fahrpositionen zwar kontinuierlich und fortlaufend ermittelt, aber nur dann gespeichert werden, wenn sich die Reinigungsbürste in Kontakt mit dem Fahrzeug befindet.

In einer vorteilhaften Ausführungsform der Erfindung kann die Vorrichtung ferner dazu ausgebildet sein, weitere Reinigungsaggregate der Waschanlage basierend auf der ermittelten Mittenposition des Fahrzeuges dediziert zu steuern, zu aktivieren und/oder zu deaktivieren. Soll z.B. bei einem außermittig positionierten KFZ dennoch der Waschvorgang ausgeführt werden, dann können die beiderseitigen Waschaggregate asymmetrisch angesteuert werden. Insbesondere können die Aggregate der entfernteren Seite zumindest teilweise weiter zugestellt werden als die jeweils gegenüberliegenden Aggregate. Beispielsweise kann die Felgenreinigung deaktiviert werden, wenn durch einen zu großen Abstand des Rades zu dem Reinigungsaggregat keine Reinigungswirkung erzielt werden kann. In vorteilhafter Weise kann somit die Prozesszeit optimiert werden. Falls die gemessene Breite des Fahrzeugs zusätzlich zur berechneten Mittenposition als Datensatz vorliegt (über Sensorik gemessen oder berechnet) können in einer Weiterbildung der Erfindung die Felgenwäscher dezidiert und modifiziert angesteuert werden, z.B. indem sie weiter zugestellt werden, um den größeren Abstand zwischen Felge und Reinigungsaggregat (z.B. verursacht durch eine Schiefstellung oder durch eine außermittige KFZ-Positionierung) auszugleichen, soweit möglich. Ferner kann der Anwender der Waschanlage über eine Ausgabeeinheit Information entsprechend dem Reinigungsergebnis abrufen (PULL-Modus) oder kann diese bereitgestellt bekommen (PUSH-Modus).

Bei einer außermittigen Positionierung und/oder bei einer Schrägstellung des KFZ kann ein entsprechender Hinweis an den Betreiber und/oder Fahrer ausgegeben werden. Letzterer kann insbesondere darüber informiert werden, dass mit Qualitätseinbußen zu rechnen ist. Dazu kann die Waschanlage und insbesondere die Vorrichtung eine Ausgabeeinheit zur Ausgabe eines Warnsignals, beispielsweise einem Monitor, Computer, Terminal, Handheld, basierend auf der ermittelten Mittenposition des Fahrzeuges umfassen (z.B. akustisch und/oder optisch, mit oder ohne grafische Darstellung von Korrekturmaßnahmen zur Umpositionierung des KFZ). Die ausgegebenen Informationen können sowohl die Positionierungsinformationen des Fahrzeuges in der Waschanlage umfassen, als auch Informationen über den Reinigungsprozess und die Reinigungsparameter, die sich aus der Positionierung ergeben (z.B. Erwartung eines unzureichenden Waschergebnisses aufgrund von Fehlpositionierung des KFZ). In vorteilhafter Weise kann somit der Reinigungsvorgang überprüft und evaluiert werden.

In einer weiteren vorteilhaften Ausführungsform der Erfindung kann die erste und/oder zweite Messeinheit (zur Erfassung der Fahrschlittenposition) einen Inkrementalgeber oder einen Absolutwertgeber umfassen. Die Vorrichtung kann darüber hinaus noch weitere Signalgeber, wie etwa Lichtschranken, umfassen.

Gemäß einem weiteren Aspekt bezieht sich die Erfindung auf eine Vorrichtung zum Ermitteln einer geometrischen Mittenposition eines innerhalb der Waschanlage positionierten Fahrzeuges zur Verwendung für oder in eine/r Waschanlage, wie vorstehend beschrieben. Vorzugsweise ist die Vorrichtung zur Ausführung des eben beschriebenen Verfahrens zum Ermitteln der Mittenposition ausgebildet. Damit kann das Verfahren zur Berechnung der Mittenposition basierend auf der tatsächlichen Fahrzeugposition als separates Modul (z.B. als ADD-ON, verfügbar bei einer zusätzlichen Lizenz für den Betreiber) auch für bereits in Betrieb befindliche Waschanlagen angeboten werden.

Bisher wurde die Erfindung in Bezug auf die beanspruchte Waschanlage beschrieben. Merkmale, Vorteile oder alternative Ausführungsformen, die im Zusammenhang mit der Waschanlage oder der Vorrichtung beschrieben oder beansprucht sind können auch auf das nachfolgend beschriebene Verfahren oder auf die anderen beanspruchten Gegenstände (z.B. der Recheneinheit oder einem Computerprogramm) übertragen werden und umgekehrt. Mit anderen Worten, der Gegenstand, der in Bezug auf die Waschanlage beansprucht oder beschrieben wird, kann durch Merkmale verbessert werden, die im Rahmen des Verfahrens beschrieben oder beansprucht werden und umgekehrt. In diesem Fall werden die Struktureinheiten der Vorrichtung durch Funktionsmerkmale des Verfahrens verkörpert und umgekehrt. Im Allgemeinen sind in der Informatik eine Software-Implementierung und eine entsprechende Hardware-Implementierung gleichwertig. So kann beispielsweise ein Verfahrensschritt zum "Erfassen von Positionen" mittels einem entsprechenden Signalgeber zur Erfassung von Ortsdaten durchgeführt werden. Um Redundanzen zu vermeiden, kann die Recheneinheit zwar auch in den mit Bezug auf das Verfahren beschriebenen alternativen Ausführungsformen verwendet werden, diese Ausführungsformen werden jedoch für die Recheneinheit nicht noch einmal explizit beschrieben.

Gemäß einem weiteren Aspekt bezieht sich die Erfindung auf ein computer-implementiertes Verfahren zum Ermitteln einer geometrischen Mittenposition eines innerhalb einer Waschanlage positionierten Fahrzeuges, wobei die Waschanlage eine Traverse umfasst, die sich annähernd quer zur Längsachse des Fahrzeuges erstreckt und an der zwei in Längsrichtung der Traverse verfahrbare Fahrschlitten angeordnet sind und wobei die Waschanlage weiter umfasst: eine erste Reinigungsbürste, die an dem ersten Fahrschlitten aufgehängt ist, und eine zweite Reinigungsbürste, die an dem zweiten Fahrschlitten aufgehängt ist, mit den Schritten gemäß dem Patentanspruch 11.

Unter dem Begriff "Messposition" ist eine Relativ-Position zwischen der jeweiligen seitlichen Reinigungsbürste an der Traverse und Fahrzeug zu verstehen, bei der in einer Draufsicht die beiden Seitenbürsten mit ihrer Rotationsachse auf Höhe des Fahrzeugs angeordnet sind. Wenn die seitlichen Reinigungsbürsten dann mittels der Fahrschlitten nach Innen bewegt werden, ist sichergestellt, dass sie in Kontakt mit dem Fahrzeug und insbesondere mit der jeweiligen seitlichen Außenfläche des KFZ gelangen. Es kann mehrere Messpositionen über die Länge des KFZ geben, so dass die Datenerfassung mehrfach sequentiell an unterschiedlichen Positionen in Bezug auf die Längserstreckung des Fahrzeugs ausgeführt werden kann.

Der Begriff "Mittenposition" meint die Mitte des Fahrzeuges. Die Mitte des Fahrzeuges wird nicht mehr durch die Mitte der Waschanlage bestimmt, sondern soll die aktuelle Position des Fahrzeuges in der Waschanlage berücksichtigen, insbesondere bei Abweichung der Mittellängsachse des Fahrzeugs von der Mittellängsachse der Waschanlage, also seitliche ungenaue Positionierung oder Fehlpositionierung. Bei einem außermittig positionierten Fahrzeug stimmt die gemäß diesem Vorschlag ermittelte Mittenposition somit nicht mit der Mitte der Waschanlage überein und kennzeichnet somit korrekt die aktuelle Position des Fahrzeugs.

In einem weiteren Aspekt betrifft die Erfindung ein Computerprogramm mit Programmcode für das Ausführen des vorstehend beschriebenen Verfahrens zum Ermitteln bzw. zum computer-gestützten Berechnen der Mittenposition, wenn das Computerprogramm auf einem elektronischen Gerät (Computer oder Mikroprozessor einer Steuerung einer Waschanlage) ausgeführt wird. Das Computerprogramm kann lokal installiert oder über eine Netzwerkverbindung von einem Server per Download bereitgestellt werden, Weiterhin ist es möglich, lediglich die ortsgebundenen Verfahrensschritte des Erfassens der beiden Positionen der Fahrschlitten lokal auf der Waschanlage auszuführen und die Berechnung der Mittenposition auf einer anderen Einheit, z.B. auf einem (evtl. leistungsfähigeren) zentralen Server oder in einer Cloud, die für eine Vielzahl von Waschanlagen als verteilte Datenbank betrieben werden kann. Damit kann das System als verteiltes System ausgebildet werden mit entsprechenden Netzwerkverbindungen.

Ein weiterer Aspekt der Erfindung bezieht sich auf ein Reinigungsverfahren zum Reinigen eines innerhalb einer Waschanlage positionierten Fahrzeuges, mit den Schritten:
- Ermitteln der geometrischen Mittenposition des Fahrzeugs mit einem Verfahren, wie vorstehend beschrieben;
- Reinigen des innerhalb der Waschanlage positionierten Fahrzeuges und Ansteuern von Reinigungsaggregaten, insbesondere der Reinigungsbürsten basierend auf der ermittelten geometrischen Mittenposition des Fahrzeuges.

Im Sinne der vorliegenden Erfindung ist unter "entlangführbar" zu verstehen, dass die Reinigungsbürsten, insbesondere die rotierenden seitlichen Reinigungsbürsten in Kontakt mit einer Außenkontur des Fahrzeugs stehen und entlang der Längserstreckungsrichtung des Fahrzeugs während des Reinigungsvorgangs bewegt werden. Die Längserstreckungsrichtung des Fahrzeugs ergibt sich aus der Fahrtrichtungssicht. Die Mittenposition des Fahrzeuges ist die geometrische Mitte des Fahrzeuges, die sich aus der Gesamtbreite des Fahrzeuges ergibt und die Hälfte der Fahrzeugbreite darstellt. Diese kann vorteilhafterweise mit dem hier vorgestellten Verfahren auch bei schräg und/oder außermittig positionierten Fahrzeugen korrekt berechnet werden.

Die Traverse kann insbesondere im Fall einer Portalwaschanlage als eine verfahrbare Einheit ausgebildet sein, z.B. in Form eines Tores. Die Form eines Tores ergibt sich durch einen horizontal verlaufenden Querträger und zwei senkrecht stehenden Portalsäulen. Die Längsachse der Traverse ist quer zur Erstreckungsrichtung des Fahrzeuges angeordnet und entlang der Erstreckungsrichtung des in der Waschanlage positionierten Fahrzeuges verfahrbar. Die Traverse kann mittels einer Antriebseinheit von einem ersten Ende des Fahrzeuges, beispielsweise der Front, zu dem zweiten Ende des Fahrzeuges, dem Heck und umgekehrt verfahren werden. Alternativ kann die Traverse von zwei Antriebseinheiten bewegt werden, die so angesteuert werden, dass beide Seiten der Traverse synchron verfahren werden.

Der erste Fahrschlitten und der zweite Fahrschlitten sind ausgebildet, die erste Reinigungsbürste und die zweite Reinigungsbürste - bevorzugt lösbar - aufzunehmen. Die Fahrschlitten können durch einen elektrischen Antrieb in der Erstreckungsrichtung der Traverse verfahren werden. In vorteilhafter Weise können somit die erste Reinigungsbürste und die zweite Reinigungsbürste von außen in Richtung der Fahrzeugseiten des Fahrzeugs und zurück verfahren werden. Somit können unterschiedliche große Fahrzeuge gleichmäßig gereinigt werden, bzw. das Reinigen des Fahrzeugs kann entsprechend der seitlichen Kontur des Fahrzeugs angepasst werden.

Als erste und zweite Messeinheit zur Erfassung einer Fahrposition des jeweiligen Fahrschlittens können bekannte technische Systeme zum Bestimmen einer Wegstrecke verwendet werden, wie z.B. Lagesensoren, die z.B. als Inkrementalgeber ausgebildet sein können. Die Inkrementalgeber können auf unterschiedlichen Messprinzipien beruhen (z.B. photoelektrisch, magnetisch etc.)

Unter einem lösbaren Aufnehmen der Reinigungsbürste ist im Sinne der vorliegenden Erfindung zu verstehen, dass die Reinigungsbürste eine feste Verbindung zu dem Fahrschlitten aufweist, die bei Bedarf gelöst werden kann, beispielsweise, um die Reinigungsbürste aufgrund von Verschleiß auszutauschen.

Zudem ist im Sinne der vorliegenden Erfindung unter einer Vorrichtung eine Recheneinheit zu verstehen. Die Recheneinheit zur Ausführung der oben genannten Berechnungssaufgabe kann als eine Computereinheit, z.B. als ein embedded Computer oder ein Microprozessor ausgebildet sein. Weiterhin kann die Vorrichtung als eine speicherprogrammierbare Steuerung ausgebildet sein. Zudem kann die Vorrichtung als eine Recheneinheit ausgebildet sein, auf der eine Software SPS gehostet ist. Die Recheneinheit kann intern, innerhalb der Waschanlage oder extern, außerhalb der Waschanlage mit entsprechenden Datenverbindungen ausgebildet sein, unter anderem als Computer, Personal-Computer oder als eine Workstation in einem Computernetzwerk. Die Recheneinheit kann eine Verarbeitungseinheit (Prozessor oder Prozessoren), einen Systemspeicher und einen Systembus beinhalten, der verschiedene Systemkomponenten einschließlich des Systemspeichers mit der Verarbeitungseinheit koppelt. Die Recheneinheit kann optional einer Benutzerschnittstelle umfassen, so dass ein Benutzer Befehle und Informationen in den Computer über Eingabevorrichtungen, wie beispielsweise eine Tastatur und ein Zeigegerät, eingeben kann und/oder über die Nachrichten oder Ergebnisse ausgegeben werden. Diese und andere Eingabegeräte werden oft über eine serielle Schnittstelle, die mit dem Systembus gekoppelt ist, mit der Verarbeitungseinheit verbunden.

Der vorliegenden Erfindung liegt die Kenntnis zu Grunde, dass ein nicht optimal positioniertes Fahrzeug in einer Waschanlage einen Einfluss auf die Prozesszeit und die Qualität des Reinigungsvorgangs haben kann. Durch die vorliegende Erfindung kann die Mittenposition eines in der Waschanlage positionierten Fahrzeuges bestimmt werden und die Mittenüberdeckung beim Reinigen des Fahrzeughecks oder der Fahrzeugfront ausgehend von der ermittelten Mittenposition des Fahrzeuges durchgeführt werden. Insbesondere wird ein auf die aktuelle Fahrzeugposition abgestimmtes Bewegen der beiden rotierenden Seitenbürsten zum Reinigen des Fahrzeugs (mit Seitenflächen, Fahrzeugheck und Fahrzeugfront) ermöglicht. So werden die Seitenbürsten insbesondere passend zum Fahrzeug und dessen Ausrichtung so weit nach links und rechts bewegt, dass eine optimale Reinigung und Mittenabdeckung ohne "Freifahren" der Seitenbürsten über das KFZ hinaus erzielbar sind. Dies wird durch die Berücksichtigung der berechneten Mittenposition des KFZ möglich, wodurch Prozesszeit durch ein nicht mehr notwendiges Überfahren der Fahrzeugkontur eingespart wird. Aggregate der Waschanlage müssen somit vorteilhafterweise nicht mehr nur deshalb bewegt werden, um eine Mittenposition zu erfassen. Es erfolgt somit keine "unnötige" Reinigung. Vorteihafterweise kann somit auch Prozesszeit des Reinigungsvorganges eingespart werden. Zudem wird die Qualität der Reinigung, insbesondere an den seitlichen Enden bzw. Kurven des Fahrzeughecks oder der Fahrzeugfront verbessert.

In vorteilhafter Weise kann durch die vorliegende Erfindung eine Schiefstellung des in der Waschanlage positionierten Fahrzeuges bestimmt werden. Unter einer Schiefstellung ist eine Stellung des Fahrzeugs innerhalb der Waschanlage zu verstehen, in der das Fahrzeug nicht parallel zum Fahrweg der Waschanlage (im Falle einer Portalwaschanlage) positioniert ist. Die Schiefstellung hat zur Folge, dass beispielsweise eine erste Seitenbürste immer nachrücken muss, um den Kontakt zum Fahrzeug nicht zu verlieren, während eine gegenüberliegend angeordnete zweite Seitenbürste immer weiter zurückziehen muss, da diese Seitenbürste zu nah an dem Fahrzeug entlanggeführt würde. Die Erfindung ermöglicht es, dass bestimmte Reinigungsaggregate (z.B. Felgenbürsten) entsprechend der aktuell erfassten (möglicherweise schiefen) Stellung des Fahrzeuges in der Anlage dediziert angesteuert werden. Entsprechend der Schiefstellung können und/oder müssen Reinigungsaggregate und Reinigungsschritte deaktiviert und/oder während des Reinigungsvorgangs ausgelassen werden, da diese andernfalls eventuell das Fahrzeug beschädigen könnten.

Zudem können die rotierenden Seitenbürsten und/oder ausgewählte weitere Reinigungsaggregate entsprechend der Schiefstellung optimiert und dediziert bzw. unterschiedlich angesteuert werden, um die Prozesszeit und/oder das Reinigungsergebnis zu steigern.

Ferner kann mittels der vorliegenden Erfindung die genaue Positionierung des Fahrzeugs in der Waschanlage ermittelt werden, wodurch weitere Prozessparameter für den Reinigungsvorgang optimiert werden können, um somit ein optimale Prozesszeit und Reinigungsergebnis zu erzielen.

Vorteilhafte Ausführungsformen und Weiterbildungen ergeben sich aus den Unteransprüchen, sowie aus der Beschreibung unter Bezugnahme auf die Figuren.

Die Erfassung der Fahrpositionen des ersten und/oder zweiten Fahrschlittens können auch mit weiteren von der Vorrichtung erfassten Sensorsignalen validiert werden. Hierzu können unter anderem auch eingelesene Geometriedaten des Fahrzeugs und/oder optische Signale von Lichtschranken verwendet werden.

In einer weiteren vorteilhaften Ausführungsform ist die Vorrichtung ferner dazu ausgebildet, bestimmte Reinigungsaggregate, z.B. bei einem Auftragen von Konservierungsmitteln, basierend auf der ermittelten Mittenposition des Fahrzeuges anzusteuern.

In einer weiteren vorteilhaften Ausführungsform ist die Vorrichtung ferner dazu ausgebildet, Reinigungsaggregate zum Bereitstellen von Trocknungsluft basierend auf der ermittelten Mittenposition des Fahrzeuges anzusteuern. In vorteilhafter Weise kann somit das Trocknungsergebnis optimiert werden. Beispielsweise können die beiden Seitengebläse asymmetrisch und unabhängig voneinander und abhängig von der Fahrzeugposition angesteuert werden. Mit der Kenntnis über die Stellung des Fahrzeugs (Entfernung des Fahrzeugs zum Seitengebläse), beispielsweise bei einem größeren Abstand des Fahrzeugs zum Seitengebläse könnte dieses mit erhöhter Leistung betrieben werden, um sozusagen die außermittige Fahrzeugposition auszugleichen.

In einer weiteren vorteilhaften Ausführungsform ist die Waschanlage eine Portalwaschanlage. Durch das Ermitteln der Mittenposition des Fahrzeuges muss das Verfahren der Mittenüberdeckung nicht über die gesamte Breite der Portalwaschanlage und somit dem maximalen Fahrweg erfolgen, sondern erfolgt nur über die Breite des Fahrzeuges, wodurch die Prozesszeit für den Reinigungsvorgang verringert werden kann. Zudem kann ein entsprechender Anpressdruck an den Kanten und Rundungen des Fahrzeughecks und der Fahrzeugfront sichergestellt werden, womit das Reinigungsergebnis qualitativ hochwertiger ausfällt als bei den im Stand der Technik bekannten Waschanlagen.

In einer anderen vorteilhaften Ausführungsform ist die Waschanlage als eine Waschstraße ausgebildet. Es ergeben sich die bereits bei der Portalwaschanlage genannten Vorteile. Dies ist gerade von Vorteil, weil in einer Waschstraße das Fahrzeug in stetiger Bewegung ist und sich mit konstanter Bandgeschwindigkeit bewegt und folgende Reinigungsabschnitte erst erfolgen können, wenn vorherige Reinigungsabschnitte fertiggestellt wurden bzw. Reinigungsaggregate aus dem Gefahrenbereich herausgefahren sind. Andernfalls führt eine Reinigungsprozessverzögerung zu einem Stopp der Waschstraße oder zu einer Kollision.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

Fig. 1 eine vereinfachte Darstellung eines möglichen Ausführungsbeispiels einer erfindungsgemäßen Waschanlage;
Fig. 2 eine schematische Darstellung eines weiteren Ausführungsbeispiels einer erfindungsgemäßen Waschanlage;
Fig. 3 eine schematische Darstellung eines Ausführungsbeispiels einer im Stand der Technik bekannten Vorrichtung;
Fig. 4 ein Ablaufdiagramm zur Darstellung eines möglichen Ausführungsbeispiels eines erfindungsgemäßen Verfahrens;
Fig. 5 ein Ablaufdiagramm zur Darstellung eines weiteren möglichen Ausführungsbeispiels eines erfindungsgemäßen Verfahrens;
Fig. 6 eine schematische Darstellung eines weiteren Ausführungsbeispiels einer erfindungsgemäßen Waschanlage;
Fig. 7 eine schematische Darstellung eines weiteren Ausführungsbeispiels einer erfindungsgemäßen Waschanlage.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

### Detaillierte Beschreibung der Erfindung

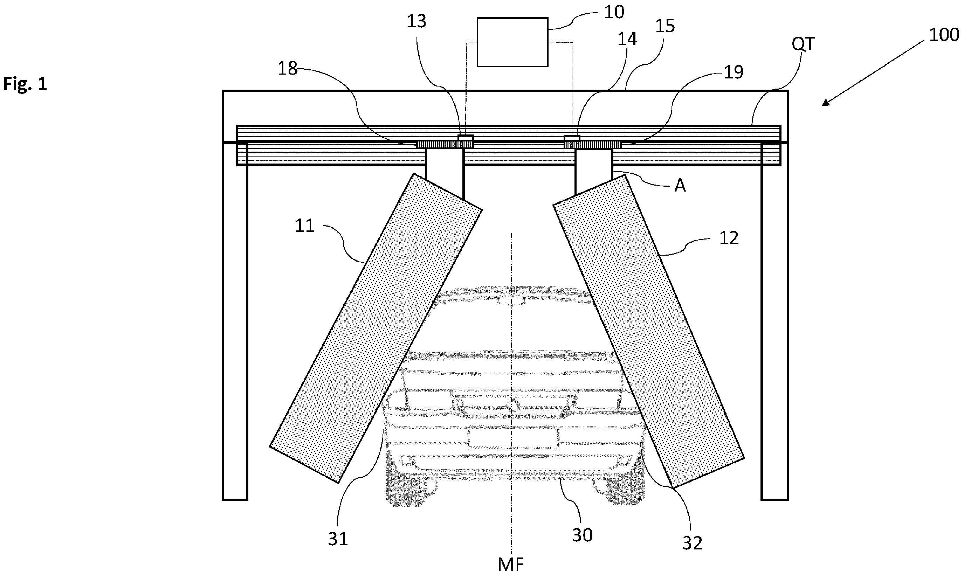

Fig. 1 zeigt eine Darstellung eines möglichen Ausführungsbeispiels einer erfindungsgemäßen Waschanlage.

In **Fig. 1** bezeichnet Bezugszeichen 100 die erfindungsgemäße Waschanlage mit einer Vorrichtung 10 zum Ermitteln einer geometrischen Mittenposition MF eines innerhalb der Waschanlage 100 positionierten Fahrzeuges 30. Die Waschanlage 100 kann als eine Portalwaschanlage oder eine Waschstraße ausgebildet sein. In der Portalwaschanlage verbleibt das zu reinigende Fahrzeug (KFZ) während des Reinigungsvorgangs an einer Position. Alle Reinigungsschritte werden an dieser Position durchgeführt. Zur Reinigung wird eine (portalartige, u-förmige) Portaltraverse, im Folgenden kurz Traverse 15, in Längsrichtung des Fahrzeugs 30 über selbiges geführt. Die Traverse 15 umfasst elektronische und mechanische Bauteile. Die Signal- oder Datenverbindungen sind in den Figuren mit einer Punktlinie gekennzeichnet. In einer Waschstraße wird das Fahrzeug 30, beispielsweise durch eine auf einer Seite installierten Schleppkette durch die Waschstraße zu den einzelnen Reinigungsstationen bewegt. Die in Fig. 1 dargestellte Waschanlage 100 stellt hierbei keine Einschränkung für die Funktionalität auf die Portalwaschanlage oder die Waschstraße dar. Vielmehr können die mit der Fig. 1 beschriebenen Funktionen sowohl auf die Portalwaschanlage, als auch auf die Waschstraße angewendet werden und ergebenden die gleichen Vorteile.

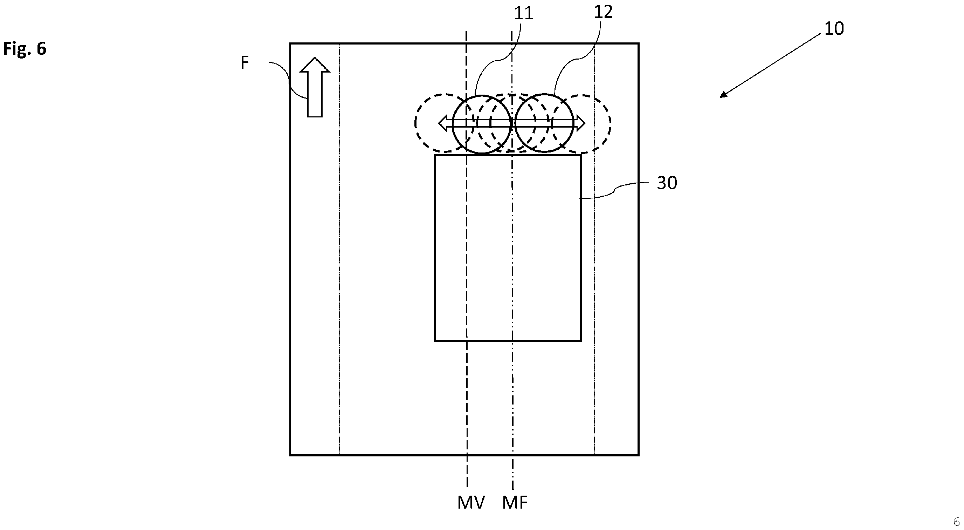

Das KFZ soll vorzugsweise derart in der Waschanlage 100 positioniert sein, dass die Längsachse der Traverse 15 annähernd quer (ca. 90°) zur Längserstreckungsrichtung des Fahrzeuges 30 angeordnet und entlang der Längserstreckungsrichtung des Fahrzeuges 30 verfahrbar ist. Die Längserstreckungsrichtung des Fahrzeuges 30 ergibt sich aus der Fahrrichtung F (vgl. Fig. 6). Die Waschanlage 100 kann neben den seitlichen Bürsten eine Dachreinigungsbürste und/oder eine Dachtrocknungseinheit umfassen (nicht gezeigt in den Figuren).

Die konstruktive Ausgestaltung der Waschanlage mit den jeweiligen Bauteilen und Reinigungsaggregaten ist an sich bekannt und bedarf keiner detaillierteren Beschreibung. Die Waschanlage umfasst insbesondere zumindest zwei mittels einer Aufhängung A rotierbar an der Traverse 15 gelagerte Bürsten, wobei die Aufhängung A wiederum an einem Fahrschlitten FS angeordnet ist, der an der Traverse 15 verfahrbar ist. Dazu ist ein Querträger QT vorgesehen, der dazu ausgebildet ist, die beiden Fahrschlitten 18, 19 aufzunehmen. In dem in den Figuren dargestellten Ausführungsbeispiel erstreckt sich der Querträger QT über die gesamte Breite der Portaltraverse 15; in alternativen Ausführungen können auch zwei separate Querträger zur Aufnahme der beiden Fahrschlitten ausgebildet sein, die sich über einen maximalen Bewegungsbereich der Fahrschlitten erstrecken. Für weitere Details wird beispielsweise auf die DE 10 2014 112 388 A1 verwiesen.

Die Waschanlage 100 umfasst weiterhin wenigstens eine erste Reinigungsbürste 11 und eine zweite Reinigungsbürste 12. Die erste Reinigungsbürste 11 und die zweite Reinigungsbürste 12 sind seitlich von dem Fahrzeug 30 angeordnet und werden für den Reinigungsvorgang an das Fahrzeug 30 bewegt, bis die Bürstenhaare in Kontakt mit dem Fahrzeug 30 stehen oder einen Druck auf das Fahrzeug 30 ausüben. Die Reinigungsbürsten 11, 12 sind als rotierende Reinigungsbürsten ausgebildet. Die Reinigungsbürste 11 ist an der ersten Außenfläche 31 des Fahrzeugs 30 entlangführbar. Die Reinigungsbürste 12 ist an der zweiten Außenfläche 32 des Fahrzeugs 30 entlangführbar. Die Reinigungsbürsten sind über die gesamte Länge des Fahrzeuges 30, von der Front bis zu dem Heck des Fahrzeuges 30 entlangführbar. Das vorliegende Beispiel der Waschanlage 100 wird nur mit zwei Reinigungsbürsten 11, 12 beschrieben. Die Erfindung ist jedoch nicht darauf beschränkt und kann in jeder Ausführungsform analog abgewandelt beispielsweise auch mit weiteren Reinigungsbürsten realisiert werden.

Die rotierbaren Reinigungsbürsten 11, 12 sind mittels der Aufhängung A schwenkbar jeweils an einem Fahrschlitten 18, 19 an der Traverse gelagert. Die Fahrschlitten 18, 19 sind entlang der Längsachse der Traverse 15 verfahrbar. Der erste Fahrschlitten 18 und der zweite Fahrschlitten 19 können insbesondere durch jeweils einen elektrischen Antrieb in der Erstreckungsrichtung der Traverse 15 separat und unabhängig voneinander verfahren werden. In vorteilhafter Weise können somit die erste Reinigungsbürste 11 und die zweite Reinigungsbürste 12 in Richtung der Fahrzeugseiten 31, 32 des Fahrzeuges 30 verfahren werden. Somit können unterschiedliche große Fahrzeuge 30 gleichmäßig gereinigt werden bzw. es kann das Reinigen des Fahrzeuges 30 entsprechend der Kontur des Fahrzeuges 30 angepasst werden.

Die Fahrschlitten 18, 19 weisen jeweils eine Messeinheit zum Erfassen von Fahrpositionen auf. An dem ersten Fahrschlitten 18 ist eine erste Messeinheit 13 zum Erfassen einer Fahrposition des ersten Fahrschlittens 18 angeordnet. An dem zweiten Fahrschlitten 19 ist eine zweite Messeinheit 14 zum Erfassen einer Fahrposition des zweiten Fahrschlittens 19 angeordnet. Über die erfassten Fahrpositionen kann beispielsweise die verfahrene Wegstrecke der Fahrschlitten 18, 19 ermittelt bzw. bereitgestellt werden. Über die sich aus einer Startposition und einer erfassten Fahrposition der Fahrschlitten 18, 19 ergebene Wegestrecke kann die Breite des Fahrzeuges 30 ermittelt werden. Über die Breite der Traverse bzw. über den Fahrbereich der Fahrschlitten unter Berücksichtigung der Breite des Fahrzeuges 30 und über die exakte Fahrposition der Fahrschlitten kann die Mittenposition des Fahrzeuges 30 ermittelt werden. Die erste Messeinheit 13 und die zweite Messeinheit 14 können als ein Magnetfeldsensor ausgebildet sein. Dies hat den Vorteil, dass die Position des ersten Fahrschlittens 18 und/oder des zweiten Fahrschlittens 19 präziser ermittelt werden können. Zudem kann durch den Magnetfeldsensor eine hohe Auflösung erreicht werden, womit eine exakte Position des ersten und zweiten Fahrschlittens 18, 19, beispielsweise im Millimeterbereich, bereitgestellt werden kann.

Die Erfassung der Fahrposition des ersten Fahrschlittens 18 und des zweiten Fahrschlittens 19 kann über eine Detektion einer Leistungsaufnahmeänderung des Bürstenrotationsantriebes der jeweiligen Reinigungsbürste und/oder über eine Detektion der Winkeländerung der Reinigungsbürsten getriggert bzw. ausgelöst werden.

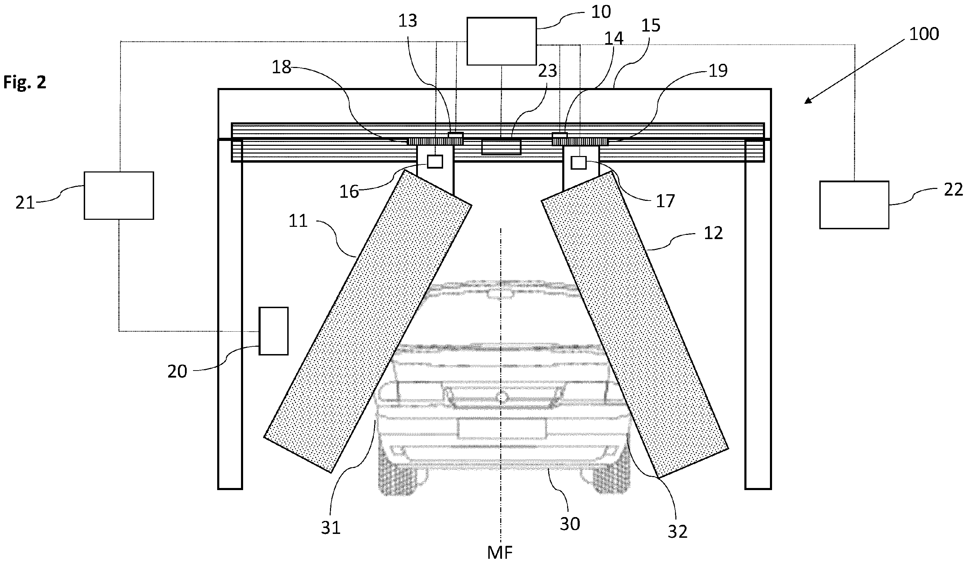

**Fig. 2** zeigt eine schematische Darstellung eines weiteren Ausführungsbeispiels einer erfindungsgemäßen Waschanlage.

Das in der Fig. 2 dargestellte Ausführungsbeispiel umfasst die Elemente des in der Fig. 1 dargestellten Ausführungsbeispiels und ist um weitere Elemente ergänzt. In Fig. 2 bezeichnet Bezugszeichen 16, 17 die dritte Messeinheit und die vierte Messeinheit. Die dritte Messeinheit 16 ist an der ersten Reinigungsbürste 11 zur Erfassung eines Neigungswinkels der ersten Reinigungsbürste 11 angeordnet. Die vierte Messeinheit 17 ist an der zweiten Reinigungsbürste 12 zur Erfassung eines Neigungswinkels der zweiten Reinigungsbürste 12 angeordnet. Für die ersten Messeinheit 16 und für die zweite Messeinheit 17 kann ein Winkelsensor verwendet werden. Die Neigungswinkel der ersten Reinigungsbürste 11 und der zweiten Reinigungsbürste 12 können während des Reinigungsvorgangs der Fahrzeugseiten 31, 32 des Fahrzeuges 30 ermittelt werden. Die Neigungswinkel können beispielsweise während einem ersten Reinigungsvorgangs ermittelt werden, bei dem die rotierenden Reinigungsbürsten 11, 12 mit geringem Anpressdruck an der Fahrzeugseite 31, 32 des Fahrzeuges 30 entlang geführt werden oder während eines zweiten Reinigungsvorgangs, bei dem die rotierenden Reinigungsbürsten 11, 12 mit stärkerem Anpressdruck an der Fahrzeugseite 31, 32 des Fahrzeuges 30 entlang geführt werden. Es ist anzumerken, dass die Reihenfolge und der ausgewählte Anpressdruck beliebig variiert werden können.

In einer Ausführungsform kann der Winkelsensor einen Magneten und einen Magnetfeldsensor umfassen. Da es sich um einen magnetischen Winkelsensor handelt, werden Störungen des Winkelsensors durch Erschütterung, Temperaturschwankungen, Feuchtigkeit oder durch den Wasserdruck minimiert. Für das Ermitteln des Neigungswinkels der Reinigungsbürsten 11, 12 wird die Veränderung der Ausrichtung des Magnetfeldes bestimmt. In einer Ausführungsform kann der Magnet entfernt vom Magnetfeldsensor auf der Schwenkachse der jeweiligen Reinigungsbürste angeordnet werden. Dabei ist der Magnet beabstandet vom Magnetfeldsensor auf der Schwenkachse angebracht und der Magnetfeldsensor ist an der Aufhängung der Bürste, jedoch nicht an der Schwenkachse vorgesehen. So kann der Neigungswinkel der jeweiligen Reinigungsbürste kontinuierlich und mit besonders hoher Genauigkeit durch den Winkelsensor überwacht werden. In Ausführungsformen mit mehreren Schwenkachsen pro Reinigungsbürste 11, 12 kann für jede Schwenkachse der jeweiligen Reinigungsbürste 11, 12 ein Winkelsensor vorgesehen sein. Es ist anzumerken, dass alle Ausführungsformen, bei denen ein Winkelsensor vorgesehen ist, eine besondere Sensorik und Aktorik ermöglichen, weil es sich bei dem Winkelsensor in vorteilhafter Weise nicht um einen Punktsensor und auch nicht um einen akzelerations-basiert-betriebenen Sensor handelt.

In vorteilhafter Weise kann aus der Fahrposition des ersten Fahrschlittens 18 und der Fahrposition des zweiten Fahrschlittens 19 durch die erste Messeinheit 13 und die zweite Messeinheit 14 zu dem Zeitpunkt, bei dem die Reinigungsbürsten 11, 12 in Kontakt oder in Eingriff mit der Seitenfläche des Fahrzeuges 30 kommen, die Mittenposition MF des Fahrzeuges 30 bestimmt werden.

Die erste Reinigungsbürste 11 und die zweite Reinigungsbürste 12 können über deren jeweilige Fahrschlitten 18, 19 derart entlang der Erstreckungsrichtung der Traverse 15 auf das Fahrzeug zu gefahren oder von dem Fahrzeug 30 wegverfahren werden, so dass die Reinigungsbürsten 11, 12 mit konstantem Druck an dem Fahrzeug 30 entlang verfahrbar sind. Dabei kann kontinuierlich der Neigungswinkel der ersten und zweiten Reinigungsbürste 11, 12 ermittelt werden kann.

Die Waschanlage 100 kann weiterhin eine fünfte Messeinheit 23 umfassen, die z.B. an der Traverse 15 ausgebildet ist. Die fünfte Messeinheit 23 kann ausgebildet sein, eine Anfangsposition und eine Endposition des Fahrzeuges 30 in der Längserstreckungsrichtung und/oder in der Quererstreckung des Fahrzeuges 30 zu ermitteln. Die fünfte Messeinheit 23 kann als eine Lichtschranke oder Scanner ausgebildet sein. Mittels der fünften Messeinheit können beispielsweise die Länge und/oder die Breite des Fahrzeuges 30 ermittelt werden.

Die Waschanlage 100 umfasst eine Vorrichtung 10, die ausgebildet ist, die geometrische Mittenposition MF des innerhalb der Waschanlage 100 positionierten Fahrzeuges 30 basierend auf den erfassten Fahrpositionen des ersten Fahrschlittens und des zweiten Fahrschlittens zu ermitteln. Die Vorrichtung 10 kann somit die Position des Fahrzeuges 30, ein Abweichen von der Mitte der Waschanlage 100 und/oder eine Schiefstellung des Fahrzeuges 30 innerhalb der Waschanlage 100 ermitteln. Die Vorrichtung 10 kann als eine Recheneinheit ausgebildet sein, die über eine Kommunikationsverbindung, beispielsweise eine Ethernet-Verbindung oder serielle Verbindung (RS232, RS485) mit der Waschanlage 100 und optional mit weiteren elektronischen Einheiten (z.B. einer zentralen Datenbank zum Verarbeiten von Fahrzeuggeometriedaten etc.) verbunden ist. Dies umfasst zudem, auch wenn in der Fig. 2 nicht dargestellt, dass die Vorrichtung 10 nicht örtlich an die Waschanlage 100 gebunden ist, sondern auch separat an einem anderen Ort betrieben werden kann. Zudem kann die Vorrichtung 10 mit weiteren elektronischen und/oder mechanischen Komponenten 20 (Speicher, Regelbasis, Steuerungen für Bauteile der Waschanlage 100) verbunden sein. In der Fig. 2 ist zur Veranschaulichung nur eine Komponente 20 dargestellt.

Zudem weist die Vorrichtung 10 eine Verbindung zu einer Ausgabeeinheit 22 auf. Über die Ausgabeeinheit 22 können dem Betreiber der Waschanlage 100 und/oder dem Anwender Informationen über den Reinigungsvorgang, sowie über die Positionierung des Fahrzeuges 30 innerhalb der Waschanlage 100 bereitgestellt werden.

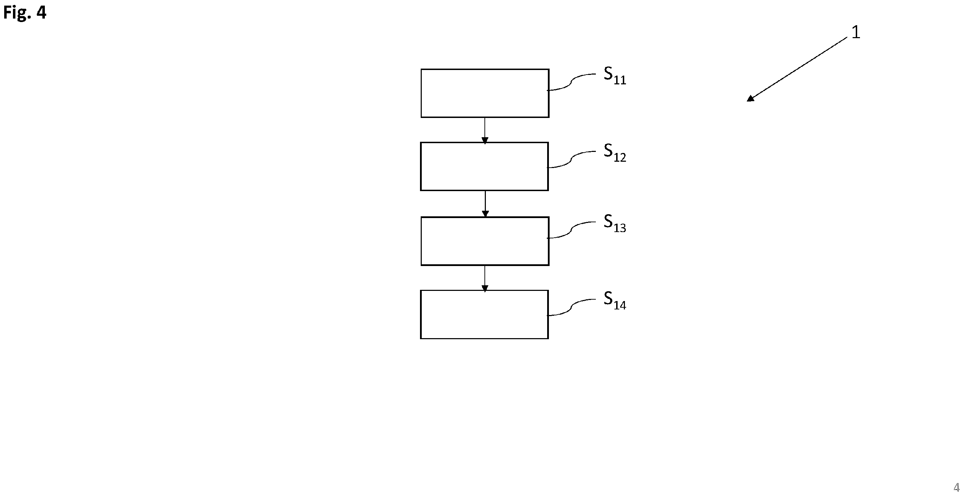

**Fig. 4** zeigt ein Ablaufdiagramm zur Darstellung eines möglichen Ausführungsbeispiels eines erfindungsgemäßen Verfahrens 1.

Das Verfahren 1 zum Ermitteln einer geometrischen Mittenposition MF eines innerhalb einer Waschanlage 10 positionierten Fahrzeuges 30 umfasst bei dem dargestellten Ausführungsbeispiel mehrere Schritte. In einem ersten Schritt S11 werden Steuersignale zum Verfahren einer Traverse 15 entlang der Längserstreckungsrichtung des Fahrzeuges 30 bereitgestellt. An der Traverse 15 sind wenigstens eine erste Reinigungsbürste 11 und wenigstens eine zweite Reinigungsbürste 12 angeordnet, die an einer ersten Außenfläche 31 und einer zweiten Außenfläche 32 des Fahrzeuges 30 entlangführbar sind. In einem weiteren Schritt S12 werden Steuersignale zum Verfahren von den an der Traverse 15 angeordneten ersten und zweiten Fahrschlitten 18, 19 entlang der Längserstreckungsrichtung der Traverse 15 bereitgestellt. In einem weiteren Schritt S13 werden Fahrpositionen des ersten Fahrschlittens 18 und des zweiten Fahrschlittens 19 über eine erste Messeinheit 13 an dem ersten Fahrschlitten 18 und über eine zweite Messeinheit 14 an dem zweiten Fahrschlitten 19 erfasst, sobald die Reinigungsbürste in Kontakt mit dem Fahrzeug 30 kommt. Dies wird über eine entsprechende Sensorik (Winkelsensor und/oder Leistungsaufnehmer automatisch detektiert). In einem Schritt S14 wird die geometrische Mittenposition MF des innerhalb der Waschanlage 100 positionierten Fahrzeuges 30 ermittelt, basierend auf den erfassten Fahrpositionen des ersten Fahrschlittens 18 und des zweiten Fahrschlittens 19.

In einer Ausführungsform wird die erfasste Fahrposition des ersten Fahrschlitten 18 und die zweite Fahrposition des zweiten Fahrschlitten 19 in dem Moment erfasst, wenn durch die Bürstenrotationsantriebe der Reinigungsbürsten eine Leistungsaufnahmeänderung erfolgt. Die Leistungsaufnahmeänderung kann sich über einen Kontakt der Reinigungsbürsten 11, 12 mit einer der Fahrzeugseiten 31, 32 des Fahrzeugs oder durch den Kontaktverlust ergeben. Die Fahrposition des ersten Fahrschlitten 18 wird über die erste Messeinheit 13 und die Fahrposition des zweiten Fahrschlitten 19 wird über die zweite Messeinheit 14 bestimmt.

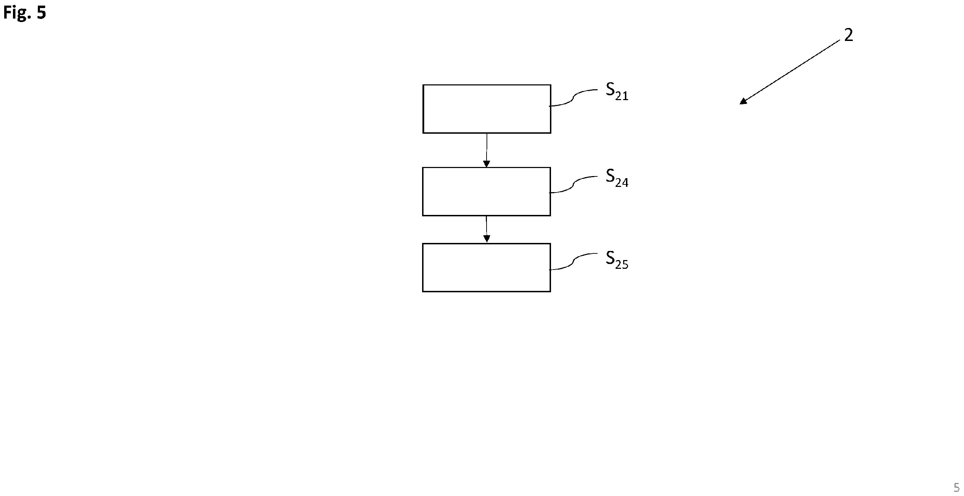

**Fig. 5** zeigt ein Ablaufdiagramm zur Darstellung eines möglichen Ausführungsbeispiels eines erfindungsgemäßen Verfahrens 2.

Das Verfahren 2 zum Reinigen eines innerhalb einer Waschanlage 100 positionierten Fahrzeuges 30 umfasst bei dem dargestellten Ausführungsbeispiel mehrere Schritte. In einem ersten Schritt S21 werden die Sensordaten erfasst (Fahrpositionen der Schlitten, evtl. weitere Daten, wie Länge/Breite KFZ etc.). In einem weiteren Schritt S24 wird die Mittenposition des innerhalb der Waschanlage 100 positionierten Fahrzeuges 30 - wie vorstehend beschrieben - berechnet und in Schritt S25 wird das Fahrzeug 30, basierend auf der ermittelten geometrische Mittenposition MF des Fahrzeuges 30, gereinigt.

In einer Ausführungsform wird die erfasste Fahrposition des ersten Fahrschlitten 18 und die zweite Fahrposition des zweiten Fahrschlitten 19 in dem Moment erfasst, wenn durch die Bürstenrotationsantriebe der Reinigungsbürsten eine Leistungsaufnahmeänderung erfolgt. Die Leistungsaufnahmeänderung kann sich über einen Kontakt der Reinigungsbürsten 11, 12 mit einer der Fahrzeugseiten 31, 32 des Fahrzeugs oder durch den Kontaktverlust ergeben. Die Fahrposition des ersten Fahrschlitten 18 wird über die erste Messeinheit 13 und die Fahrposition des zweiten Fahrschlitten 19 wird über die zweite Messeinheit 14 bestimmt.

Die Mittenposition kann über die gesamte Länge des Fahrzeuges 30 in einem vorkonfigurierbaren Abstand oder an der Front und am Heck des Fahrzeuges oder nach einem Zeitmuster bestimmt werden. Aus den für jeden Bereich des Fahrzeuges ermittelten Fahrschlittenpositionen kann für den jeweiligen Bereich des Fahrzeuges 30 die Mittenposition MF ermittelt werden. Über die mehrfach ermittelte Mittenposition können weitere Berechnungen ausgeführt und ggf. Reinigungskomponenten modifiziert angesteuert werden. Zudem können dem Nutzer und/oder dem Betreiber der Waschanlange entsprechende Informationen über den Status des Fahrzeugs in der Waschanlage und/oder über den Waschvorgang bereitgestellt werden.

Fig. 6 zeigt eine Darstellung eines weiteren Ausführungsbeispiels einer erfindungsgemäßen Waschanlage 100.

In **Fig. 6** bezeichnet Bezugszeichen 100 die erfindungsgemäße Waschanlage zum Ermitteln einer geometrischen Mittenposition MF eines innerhalb der Waschanlage 100 positionierten Fahrzeuges 30. Die in Fig. 6 dargestellte Waschanlage 100 ist nicht auf eine Portalwaschanlage beschränkt, sondern kann sinngemäß auf eine Waschstraße angewendet werden. In Fig. 6 ist die geometrische Mittenposition MV der Waschanlage 100 dargestellt. Bei im Stand der Technik bekannten Waschanlagen 100 wird die geometrische Mittenposition MV der Waschanlage 100 als Referenzposition für das Verfahren einer Mittenüberdeckung verwendet. Beginnend ab der geometrischen Mittenposition MV der Waschanlage 100 verfahren die Reinigungsbürsten 11, 12 nach links und rechts, um insbesondere das Heck eines Fahrzeuges 30 vollständig zu reinigen. In Fig. 6 wird gemäß der vorliegenden Erfindung die ermittelte Mittenposition MF des Fahrzeuges 30 als Referenzposition für ein Verfahren einer Mittenüberdeckung verwendet. Beginnend ab der geometrischen Mittenposition MF des Fahrzeuges 30 verfahren die Reinigungsbürsten 11, 12 nach links und rechts, um insbesondere das Heck eines Fahrzeuges 30 vollständig zu reinigen. In Fig. 6 weist das Fahrzeug 30 eine stark nach rechts orientierte Position innerhalb der Waschanlage 100 auf. In vorteilhafter Weise wird erfindungsgemäß die Mittenposition MF des Fahrzeuges 30 für die Mittenüberdeckung verwendet, wodurch die Reinigungsbürsten nicht über die Front bzw. das Heck des Fahrzeugs 30 hinausfahren. Die in Fig. 6 gestrichelt dargestellten Reinigungsbürsten 11, 12 stellen die Positionen während der Mittenüberdeckung dar. Diesbezüglich kann die Prozesszeit durch ein optimiertes Reinigen der Front und des Hecks des Fahrzeuges 30 verringert werden und das Reinigungsergebnis verbessert werden.

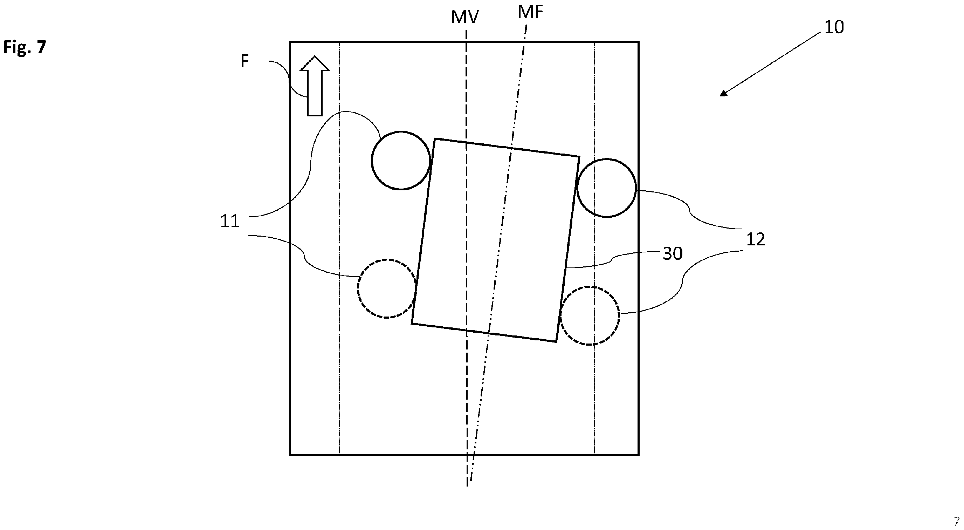

**Fig. 7** zeigt eine Darstellung eines weiteren Ausführungsbeispiels einer erfindungsgemäßen Waschanlage 100.

In Fig. 7 ist ein Fahrzeug 30 in einer Schiefstellung in der Waschanlage 100 positioniert. Insbesondere zu Beginn des Reinigungsvorgangs der Seitenflächen des Fahrzeuges 30 werden die Reinigungsbürsten 11, 12 entsprechend der Positionierung (Schiefstellung) des Fahrzeuges 30 auf das Fahrzeug 30 zugeführt. Wie vorstehend beschrieben kann über die ermittelten Fahrschlittenpositionen die Mittenposition MF des Fahrzeugs 30 abhängig von der Position des KFZ in der Waschanlage ermittelt werden. Basierend auf der ermittelten Mittenposition MF kann in einer Portalwaschanlage die Zustellung der Seitenbürsten und/oder die Ansteuerung (insbesondere die Zustellung) von weiteren seitlichen Reinigungsaggregaten modifiziert werden, so dass trotz der Schiefstellung des Fahrzeuges die Prozesszeit optimiert ist und ein entsprechendes Reinigungsergebnis erzielt wird. Zudem können entsprechende Reinigungsaggregate, beispielsweise ein Felgenwäscher deaktiviert werden, wenn beispielsweise dieser die Felge des Fahrzeuges 30 (hinten rechts) nicht mehr erreichen kann, bzw. das Reinigungsergebnis nicht den geforderten Standards entspricht. Das Deaktivieren eines Felgenwäschers kann dem Betreiber der Vorrichtung 10 und/oder des Fahrzeuges 30 signalisiert und/oder auf einer Ausgabeeinheit dargestellt werden.

In einer Ausführungsform kann die Waschanlage 100 als eine Waschstraße ausgebildet sein.

Zusammenfassend betrifft die vorliegende Erfindung einen Mechanismus für eine Waschanlage zum Ermitteln einer geometrischen Mittenposition eines innerhalb der Waschanlage positionierten Fahrzeuges, basierend auf den erfassten Fahrpositionen des ersten Fahrschlittens und des zweiten Fahrschlittens, wobei die Fahrpositionen zu einem Zeitpunkt erfasst werden, wenn die Seitenbürste jeweils in Kontakt mit einer Seitenfläche des Fahrzeuges kommt. Dies kann über die Länge des Fahrzeuges mehrfach ausgeführt werden, um insbesondere Schiefstellungen des Fahrzeuges zu erfassen und darauf basierend eine modifizierte weitere Ansteuerung der Waschanlage mit deren Aggregaten zu bewirken. Das In-Kontakt-Kommen wird jeweils durch einen Leistungsaufnehmer der rotierenden Seitenbürste und/oder durch einen Winkelsensor detektiert.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 1: Verfahren zum Ermitteln der Mittenposition
- 2: Verfahren zum Reinigen
- 10: Vorrichtung
- 11: erste Reinigungsbürste
- 12: zweite Reinigungsbürste
- 13: erste Messeinheit
- 14: zweite Messeinheit
- 15: Traverse
- 16: dritte Messeinheit
- 17: vierte Messeinheit
- 18: erster Fahrschlitten
- 19: zweiter Fahrschlitten
- 20: Reinigungsaggregate
- 21: Frequenzumrichter
- 22: Ausgabeeinheit
- 23: fünfte Messeinheit
- 30: Fahrzeug
- 31: erste Außenfläche
- 32: zweite Außenfläche
- 100: Waschanlage
- F: Fahrrichtung
- MF: Mittenposition
- MV: Mittenachse der Waschanlage
- S11-S14: Verfahrensschritte Verfahren 1
- S21-S24: Verfahrensschritte Verfahren 2

## Patentansprüche

1. Waschanlage (100) mit einer Vorrichtung (10) zum Ermitteln einer geometrischen Mittenposition (MF) eines innerhalb der Waschanlage (100) positionierten Fahrzeuges (30), umfassend:
- eine Traverse (15), die sich quer zur Längsachse des Fahrzeuges (30) erstreckt und an der zwei in Längsrichtung der Traverse (15) verfahrbare Fahrschlitten (18, 19) angeordnet sind;
- eine erste Reinigungsbürste (11), die an dem ersten Fahrschlitten (18) aufgehängt ist und eine zweite Reinigungsbürste (12), die an dem zweiten Fahrschlitten (19) aufgehängt ist;
- eine erste Messeinheit (13) an dem ersten Fahrschlitten (18) zur Erfassung einer Fahrposition des ersten Fahrschlittens (18) und eine zweite Messeinheit (14) an dem zweiten Fahrschlitten (19) zur Erfassung einer Fahrposition des zweiten Fahrschlittens (19); und wobei
- die Vorrichtung (10) dazu ausgebildet ist, die geometrische Mittenposition (MF) des innerhalb der Waschanlage (100) positionierten Fahrzeuges (30) basierend auf den erfassten Fahrpositionen des ersten Fahrschlittens (18) und des zweiten Fahrschlittens (19) zu ermitteln, und wobei die Vorrichtung (19) weiter dazu bestimmt ist, jeweils diejenige Fahrposition des ersten Fahrschlittens (18) und des zweiten Fahrschlittens (19) zur Ermittlung der Mittenposition (MF) zu verwenden, die zu einem Zeitpunkt erfasst wird, bei dem ein erster bzw. zweiter Leistungsaufnehmer zur Erfassung der Leistungsaufnahme der ersten und zweiten Reinigungsbürste (11, 12) ein verändertes Messergebnis erfasst.

2. Waschanlage (100) gemäß Anspruch 1, wobei die erste und zweite Reinigungsbürste (11, 12) jeweils über einen Bürstenrotationsantrieb angetrieben werden.

3. Waschanlage (100) nach einem der vorherigen Ansprüche, wobei die Waschanlage (100) eine dritte Messeinheit (16) zur Erfassung eines Neigungswinkels der ersten Reinigungsbürste (11) um eine Schwenkachse, die quer zur Längsrichtung der Waschanlage (100) verläuft und eine vierte Messeinheit (17) zur Erfassung eines Neigungswinkels der zweiten Reinigungsbürste (12) um eine Schwenkachse, die ebenfalls quer zur Längsrichtung der Waschanlage (100) verläuft, umfasst.

4. Waschanlage (100) nach dem unmittelbar vorangehenden Anspruch, wobei die dritte Messeinheit (16) und/oder die vierte Messeinheit (17) einen Winkelsensor umfassen.

5. Waschanlage (100) nach einem der vorherigen Ansprüche, wobei die erste Messeinheit (13), die zweite Messeinheit (14), eine dritte Messeinheit (16) und/oder eine vierte Messeinheit (17) einen Magnetfeldsensor umfassen.

6. Waschanlage (100) gemäß einem der vorherigen Ansprüche, wobei die Vorrichtung (10) dazu bestimmt ist, jeweils diejenige Fahrposition des ersten Fahrschlittens (18) und des zweiten Fahrschlittens (19) zur Ermittlung der Mittenposition (MF) zu verwenden, die zu einem Zeitpunkt erfasst wird, bei dem eine dritte bzw. vierte Messeinheit (16, 17) ein verändertes Messergebnis erfasst.

7. Waschanlage (100) nach einem der vorherigen Ansprüche, wobei die Vorrichtung (10) ferner dazu ausgebildet ist, weitere Reinigungsaggregate (20) der Waschanlage (100) basierend auf der ermittelten Mittenposition (MF) des Fahrzeuges (30) dediziert zu steuern, zu aktivieren oder zu deaktivieren.

8. Waschanlage (100) nach einem der vorherigen Ansprüche, wobei die Waschanlage (100) eine Ausgabeeinheit (22) zur Ausgabe eines Warnsignals basierend auf der ermittelten Mittenposition (MF) des Fahrzeuges (30) umfasst.

9. Waschanlage (100) nach einem der vorherigen Ansprüche, wobei die erste und/oder zweite Messeinheit (13, 14) einen Inkrementalgeber oder einen Absolutwertgeber umfasst.

10. Vorrichtung (10) zum Ermitteln einer geometrischen Mittenposition (MF) eines innerhalb der Waschanlage (100) positionierten Fahrzeuges (30) zur Verwendung in einer eirmWaschanlage (100) nach einem der vorangehenden Ansprüche, wobei die Vorrichtung (10) dazu ausgebildet ist, die geometrische Mittenposition (MF) des innerhalb der Waschanlage (100) positionierten Fahrzeuges (30) basierend auf einen erfassten Fahrpositionen eines ersten Fahrschlittens (18) und eines zweiten Fahrschlittens (19) zu ermitteln, und wobei die Vorrichtung (19) weiter dazu bestimmt ist, jeweils diejenige Fahrposition des ersten Fahrschlittens (18) und des zweiten Fahrschlittens (19) zur Ermittlung der Mittenposition (MF) zu verwenden, die zu einem Zeitpunkt erfasst wird, bei dem ein erster bzw. zweiter Leistungsaufnehmer zur Erfassung der Leistungsaufnahme der ersten und zweiten Reinigungsbürste (11, 12) ein verändertes Messergebnis erfasst.

11. Verfahren (1) zum Ermitteln einer geometrischen Mittenposition (MF) eines innerhalb einer Waschanlage (100) positionierten Fahrzeuges (30), wobei die Waschanlage (100) eine Traverse (15) umfasst, die sich quer zur Längsachse des Fahrzeuges (30) erstreckt und an der zwei in Längsrichtung der Traverse (15) verfahrbare Fahrschlitten angeordnet sind und wobei die Waschanlage (100) weiter umfasst: eine erste Reinigungsbürste (11), die an dem ersten Fahrschlitten aufgehängt ist, und eine zweite Reinigungsbürste (12), die an dem zweiten Fahrschlitten aufgehängt ist, mit den Schritten:
- Bereitstellen von Steuersignalen für einen Antriebsmotor zum Bewegen (S11) der Traverse (15) relativ zum Fahrzeug (30) oder umgekehrt in eine Messposition;
- Sobald die Messposition eingenommen ist: Bereitstellen von Steuersignalen zum Verfahren (S12) des ersten und zweiten Fahrschlittens (18, 19) nach innen bis erfasst wird, dass die Reinigungsbürste (12, 13) in Kontakt mit einer jeweiligen Außenfläche (31, 32) des Fahrzeuges (30) kommt und Beenden der Verfahrbewegung des ersten und zweiten Fahrschlittens (18, 19);
- Erfassen einer Fahrposition (S13) des ersten Fahrschlittens (18) über eine erste Messeinheit (13);
- Erfassen einer Fahrposition (S13) des zweiten Fahrschlittens (19) über eine zweite Messeinheit (14)
- Ermitteln der geometrischen Mittenposition (MF) (S14) des innerhalb der Waschanlage (100) positionierten Fahrzeuges (30) basierend auf den erfassten Fahrpositionen des ersten Fahrschlittens (18) und des zweiten Fahrschlittens (19).

12. Verfahren nach dem unmittelbar vorangehenden Anspruch, bei dem das Erfassen, ob die Reinigungsbürste (12, 13) in Kontakt mit der jeweiligen Außenfläche (31, 32) des Fahrzeuges (30) kommt, erfolgt, indem eine dritte bzw. vierte Messeinheit (16, 17) und/oder ein Leistungsaufnehmer für die erste Reinigungsbürste (11) bzw. für die zweite Reinigungsbürste (12) ein verändertes Messergebnis erfassen.

13. Computerprogramm mit Programmcode für das Ausführen eines Verfahrens (1) zum Ermitteln der Mittenposition nach dem vorangehenden Verfahrensanspruch, wenn das Computerprogramm auf einem elektronischen Gerät ausgeführt wird.

14. Verfahren (2) zum Reinigen eines innerhalb einer Waschanlage (100) positionierten Fahrzeuges (30), mit den Schritten:
- Ermitteln der geometrischen Mittenposition (MF) des Fahrzeugs (30) mit einem Verfahren (1) nach einem der vorangehenden Verfahrensansprüche;
- Reinigen (S25) des innerhalb der Waschanlage (100) positionierten Fahrzeuges (30) und Ansteuern von Reinigungsaggregaten, insbesondere der Reinigungsbürsten (11, 12) basierend auf der ermittelten geometrischen Mittenposition (MF) des Fahrzeuges (30).

## Claims

1. A washing system (100) with a device (10) for determining a geometric center position (MF) of a vehicle (30) positioned within the washing system (100), comprising:
- a cross-member (15) which extends transversely to the longitudinal axis of the vehicle (30) and on which two carriages (18, 19) are arranged which are movable in the longitudinal direction of the cross-member (15);
- a first cleaning brush (11), which is suspended from the first carriage (18), and a second cleaning brush (12), which is suspended from the second carriage (19);
- a first measuring unit (13) on the first travel carriage (18) for detecting a travel position of the first travel carriage (18) and a second measuring unit (14) on the second travel carriage (19) for detecting a traveling position of the second travel carriage (19); and wherein
- the device (10) is designed to determine the geometric center position (MF) of the vehicle (30) positioned within the washing system (100) based on the detected travel positions of the first travel carriage (18) and of the second travel carriage (19), and wherein the device (10) is further designed to use in each case that travel position of the first travel carriage (18) and of the second travel carriage (19) for determining the center position (MF) which is detected at a time at which a first or second power sensor, respectively, for detecting the power consumption of the first and second cleaning brushes (11, 12) detects a changed measurement result.

2. Washing system (100) according to claim 1, wherein the first and second cleaning brushes (11, 12) are each driven via a brush rotation drive.

3. Washing system (100) according to one of the preceding claims, wherein the washing system (100) comprises a third measuring unit (16) for detecting an angle of inclination of the first cleaning brush (11) about a pivot axis which extends transversely to the longitudinal direction of the washing system (100), and a fourth measuring unit (17) for detecting an angle of inclination of the second cleaning brush (12) about a pivot axis which also extends transversely to the longitudinal direction of the washing system (100).

4. Washing system (100) according to the immediately preceding claim, wherein the third measuring unit (16) and/or the fourth measuring unit (17) comprise an angle sensor.

5. Washing system (100) according to one of the preceding claims, wherein the first measuring unit (13), the second measuring unit (14), a third measuring unit (16) and/or a fourth measuring unit (17) comprise a magnetic field sensor.

6. Washing system (100) according to one of the preceding claims, wherein the device (10) is intended to use in each case that travel position of the first travel carriage (18) and of the second travel carriage (19) for determining the center position (MF) which is detected at a time at which a third or fourth measuring unit (16, 17) detects a changed measurement result.

7. Washing system (100) according to one of the preceding claims, wherein the device (10) is further designed to control, activate or deactivate further cleaning units (20) of the washing system (100) in a dedicated manner based on the determined center position (MF) of the vehicle (30).

8. Washing system (100) according to one of the preceding claims, wherein the washing system (100) comprises an output unit (22) for outputting a warning signal based on the determined center position (MF) of the vehicle (30).

9. Washing system (100) according to one of the preceding claims, wherein the first and/or second measuring unit (13, 14) comprises an incremental encoder or an absolute encoder.

10. Device (10) for determining a geometric center position (MF) of a vehicle (30) positioned within the washing system (100) for use in a washing system (100) according to one of the preceding claims, wherein the device (10) is designed to to determine the geometric center position (MF) of the vehicle (30) positioned within the washing system (100) based on a detected driving position of a first travel carriage (18) and a second travel carriage (19), and wherein the device (19) is further intended to use that travel position of the first travel carriage (18) and of the second travel carriage (19) for determining the center position (MF) which is detected at a time at which a first or a second power sensor, respectively, for detecting the power consumption of the first and second cleaning brushes (11, 12) detects a changed measurement result.

11. Method (1) for determining a geometric center position (MF) of a vehicle (30) positioned within a washing system (100), wherein the washing system (100) comprises a cross-member (15) which extends transversely to the longitudinal axis of the vehicle (30) and on which two carriages are arranged which can be moved in the longitudinal direction of the cross-member (15), and wherein the washing system (100) further comprises a first cleaning brush (11), which is suspended from the first travel carriage, and a second cleaning brush (12), which is suspended from the second travel carriage, with the steps:
- Providing of control signals for a drive motor for moving (S11) the cross-member (15) relative to the vehicle (30) or vice versa into a measuring position;
- As soon as the measuring position is assumed: Provision of control signals for moving (S12) the first and second carriages (18, 19) inwards until it is detected that the cleaning brush (12, 13) comes into contact with a respective outer surface (31, 32) of the vehicle (30) and ending the movement of the first and second carriages (18, 19);
- Detecting of a travel position (S13) of the first carriage (18) via a first measuring unit (13);
- Detecting of a travel position (S13) of the second carriage (19) via a second measuring unit (14)
- Determining the geometric center position (MF) (S14) of the vehicle (30) positioned within the washing system (100) based on the detected travel positions of the first travel carriage (18) and the second travel carriage (19).

12. Method according to the immediately preceding claim, in which the detection of whether the cleaning brush (12, 13) comes into contact with the respective outer surface (31, 32) of the vehicle (30) is carried out by a third or fourth measuring unit (16, 17) and/or a power sensor for the first cleaning brush (11) or for the second cleaning brush (12) detecting a changed measurement result.

13. Computer program comprising program code for executing a method (1) for determining the center position according to the preceding method claim when the computer program is executed on an electronic device.

14. Method (2) for cleaning a vehicle (30) positioned within a washing system (100), comprising the steps of:
- Determining the geometric center position (MF) of the vehicle (30) using a method (1) according to one of the preceding method claims;
- cleaning (S25) of the vehicle (30) positioned within the washing system (100) and activation of cleaning units, in particular the cleaning brushes (11, 12), based on the determined geometric center position (MF) of the vehicle (30).

## Revendications

1. Installation de lavage (100) avec un dispositif (10) pour déterminer une position centrale géométrique (MF) d'un véhicule (30) positionné à l'intérieur de l'installation de lavage (100), comprenant :
- une traverse (15) qui s'étend transversalement à l'axe longitudinal du véhicule (30) et sur laquelle sont disposés deux chariots (18, 19) déplaçables dans la direction longitudinale de la traverse (15) ;
- une première brosse de nettoyage (11) qui est suspendue au premier chariot (18) et une deuxième brosse de nettoyage (12) qui est suspendue au deuxième chariot (19) ;
- une première unité de mesure (13) sur le premier chariot (18) pour détecter une position de déplacement du premier chariot (18) et une deuxième unité de mesure (14) sur le deuxième chariot (19) pour détecter une position de déplacement du deuxième chariot (19) ; et dans lequel
- le dispositif (10) est conçu pour déterminer la position centrale géométrique (MF) du véhicule (30) positionné à l'intérieur de l'installation de lavage (100) sur la base des positions de déplacement détectées du premier chariot de déplacement (18) et du deuxième chariot de déplacement (19), et le dispositif (19) étant en outre destiné à utiliser respectivement la position de déplacement du premier chariot de déplacement (18) et du deuxième chariot de déplacement (19) pour déterminer la position centrale (MF), qui est détectée à un moment auquel un premier ou un deuxième capteur de puissance pour détecter la puissance absorbée par la première et la deuxième brosse de nettoyage (11,12), respectivement, détecte un résultat de mesure modifié.

2. Installation de lavage (100) selon la revendication 1, dans laquelle la première et la deuxième brosses de nettoyage (11, 12) sont chacune entraînées par un entraînement en rotation des brosses.

3. Installation de lavage (100) selon l'une des revendications précédentes, dans laquelle l'installation de lavage (100) comprend une troisième unité de mesure (16) pour détecter un angle d'inclinaison de la première brosse de nettoyage (11) autour d'un axe de pivotement qui s'étend transversalement à la direction longitudinale de l'installation de lavage (100) et une quatrième unité de mesure (17) pour détecter un angle d'inclinaison de la deuxième brosse de nettoyage (12) autour d'un axe de pivotement qui s'étend également transversalement à la direction longitudinale de l'installation de lavage (100).

4. Installation de lavage (100) selon la revendication immédiatement précédente, dans laquelle la troisième unité de mesure (16) et/ou la quatrième unité de mesure (17) comprennent un capteur angulaire.

5. Installation de lavage (100) selon l'une des revendications précédentes, dans laquelle la première unité de mesure (13), la deuxième unité de mesure (14), une troisième unité de mesure (16) et/ou une quatrième unité de mesure (17) comprennent un capteur de champ magnétique.

6. Installation de lavage (100) selon l'une des revendications précédentes, dans laquelle le dispositif (10) est destiné à utiliser respectivement la position de déplacement du premier chariot (18) et du deuxième chariot (19) pour déterminer la position centrale (MF) qui est détectée à un moment où une troisième ou une quatrième unité de mesure (16, 17) détecte un résultat de mesure modifié.

7. Installation de lavage (100) selon l'une des revendications précédentes, le dispositif (10) étant en outre conçu pour commander, activer ou désactiver de manière dédiée d'autres groupes de nettoyage (20) de l'installation de lavage (100) sur la base de la position centrale (MF) déterminée du véhicule (30).

8. Installation de lavage (100) selon l'une des revendications précédentes, dans laquelle l'installation de lavage (100) comprend une unité de sortie (22) pour émettre un signal d'avertissement basé sur la position centrale (MF) déterminée du véhicule (30).

9. Installation de lavage (100) selon l'une quelconque des revendications précédentes, dans laquelle la première et/ou la deuxième unité de mesure (13, 14) comprend un codeur incrémental ou un codeur absolu.

10. Dispositif (10) pour déterminer une position centrale géométrique (MF) d'un véhicule (30) positionné à l'intérieur de l'installation de lavage (100) pour une utilisation dans une installation de lavage (100) selon l'une des revendications précédentes, le dispositif (10) étant conçu à cet effet, la position centrale géométrique (MF) du véhicule (30) positionné à l'intérieur de l'installation de lavage (100) sur la base d'une position de conduite détectée d'un premier chariot de déplacement (18) et d'un deuxième chariot de déplacement (19), et dans lequel le dispositif (19) est en outre destiné à utiliser, pour la détermination de la position centrale (MF), respectivement la position de déplacement du premier chariot de déplacement (18) et du deuxième chariot de déplacement (19) qui est détectée à un moment où un premier ou un deuxième capteur de puissance pour détecter la puissance absorbée par la première et la deuxième brosse de nettoyage (11,12), respectivement, détecte un résultat de mesure modifié.

11. Procédé (1) pour déterminer une position centrale géométrique (MF) d'un véhicule (30) positionné à l'intérieur d'une installation de lavage (100), l'installation de lavage (100) comprenant une traverse (15) qui s'étend transversalement à l'axe longitudinal du véhicule (30) et sur laquelle sont disposés deux chariots déplaçables dans la direction longitudinale de la traverse (15), et l'installation de lavage (100) comprenant en outre: une première brosse de nettoyage (11), qui est suspendue au premier chariot de déplacement, et une deuxième brosse de nettoyage (12), qui est suspendue au deuxième chariot de déplacement, avec les étapes suivantes :
- fournir des signaux de commande à un moteur d'entraînement pour déplacer (S11) la traverse (15) par rapport au véhicule (30) ou inversement dans une position de mesure ;
- dès que la position de mesure est prise : fournir des signaux de commande pour déplacer (S12) les premier et deuxième chariots de déplacement (18, 19) vers l'intérieur jusqu'à ce qu'il soit détecté que la brosse de nettoyage (12, 13) vient en contact avec une surface extérieure respective (31, 32) du véhicule (30) et arrêter le mouvement de déplacement des premier et deuxième chariots de déplacement (18, 19) ;
- détecter une position de déplacement (S13) du premier chariot de déplacement (18) par l'intermédiaire d'une première unité de mesure (13) ;
- détection d'une position de déplacement (S13) du deuxième chariot de déplacement (19) par l'intermédiaire d'une deuxième unité de mesure (14)
- déterminer la position centrale géométrique (MF) (S14) du véhicule (30) positionné à l'intérieur de l'installation de lavage (100) sur la base des positions de déplacement détectées du premier chariot de déplacement (18) et du deuxième chariot de déplacement (19).

12. Procédé selon la revendication immédiatement précédente, dans lequel la détection du fait que la brosse de nettoyage (12, 13) entre ou non en contact avec la surface extérieure respective (31, 32) du véhicule (30) est effectuée en détectant un résultat de mesure modifié par une troisième ou une quatrième unité de mesure (16, 17) et/ou un capteur de puissance pour la première brosse de nettoyage (11) ou pour la deuxième brosse de nettoyage (12).

13. Programme informatique comprenant un code de programme pour l'exécution d'un procédé (1) de détermination de la position centrale selon la revendication de procédé précédente, lorsque le programme informatique est exécuté sur un appareil électronique.

14. Procédé (2) de nettoyage d'un véhicule (30) positionné à l'intérieur d'une installation de lavage (100), comprenant les étapes consistant à :
- déterminer la position centrale géométrique (MF) du véhicule (30) par un procédé (1) selon l'une des revendications de procédé précédentes ;
- nettoyage (S25) du véhicule (30) positionné à l'intérieur de l'installation de lavage (100) et commande d'agrégats de nettoyage, en particulier des brosses de nettoyage (11, 12), sur la base de la position centrale géométrique (MF) déterminée du véhicule (30).
